# FASCICULE DE BREVET EUROPEEN

(11) **EP 0 611 541 B1**
(45) Date de publication et mention de la délivrance du brevet: **06.05.1998**
(21) Numéro de dépôt: 94420053.4
(22) Date de dépôt: 14.02.1994
(51) Int. Cl.: A47J 27/08

(54) **Couvercle pour un récipient de cuisson sous pression**
Deckel für einen Druckkochtopf
Lid for a pressure cooker

(30) Priorité: 15.02.1993 FR 9301964
(43) Date de publication de la demande: 24.08.1994
(73) Titulaire: SEB S.A., 69130 Ecully (FR)
(72) Inventeur: Cartigny, Michel, F-21310 Mirebeau (FR)

(56) Documents cités:
- DE-A- 2 112 224
- DE-A- 3 734 838
- FR-A- 636 752
- FR-A- 785 438
- GB-A- 465 911
- GB-A- 770 965

## Description

La présente invention se rapporte au domaine technique général des récipients de cuisson sous pression, tels que des autocuiseurs par exemple, dans lesquels après verrouillage du couvercle sur la cuve, la cuisson des produits alimentaires contenus dans le récipient est effectuée sous une pression de vapeur supérieure à la pression atmosphérique.

La présente invention concerne un couvercle pour un récipient de cuisson sous pression qui est destiné à être rapporté et verrouillé sur la cuve du récipient de manière étanche, et qui doit être conçu pour supporter les efforts de déformation générés par la cuisson sous pression de vapeur.

La conception des couvercles de récipients pour cuisson sous pression, doit bien évidemment permettre au couvercle de résister sans déformation et sans risque pour l'utilisateur, aux efforts de déformation importants qui s'exercent sur lui pendant la cuisson. En condition d'utilisation, il s'avère que l'action des forces résultantes de la pression de vapeur conduit à générer une déformation du couvercle mal maîtrisée et le plus souvent hétérogène. En l'absence d'une maitrise suffisante des résultantes majoritaires des forces de déformation, il a toujours été proposé jusqu'à présent, de surdimensionner purement et simplement les épaisseurs et dimensions des couvercles des récipients pour cuisson sous pression. La plupart des couvercles ainsi réalisés peuvent donc être considérés comme lourds, encombrants, difficiles à manipuler et d'un coût unitaire de production élevé.

L'objet de la présente invention vise en conséquence à remédier aux problèmes énumérés précédemment et à proposer un nouveau couvercle de récipient pour cuisson sous pression permettant de rester dans des limites de poids raisonnable sans pour autant réduire la résistance à la déformation, ni influencer négativement l'aspect esthétique du couvercle.

Un autre objet de l'invention vise à proposer un nouveau couvercle de récipient pour cuisson sous pression dans lequel sa déformation mécanique est limitée, et permettant en particulier de limiter la valeur de sa flèche.

Un autre objet de l'invention est de proposer un nouveau couvercle de récipient permettant une recomposition des efforts de déformation pour permettre de minimiser le moment fléchissant agissant sur le couvercle.

Un autre objet de l'invention vise à proposer un nouveau couvercle de récipient dans lequel les efforts de flexion sont annulés.

Les objets assignés à l'invention sont atteints à l'aide d'un couvercle pour un récipient de cuisson sous pression selon les caractéristiques de la revendication 1.

D'autres particularités et avantages de l'invention apparaîtront et ressortiront plus en détail à la lecture de la description faite ci-après, en référence aux dessins annexés, donnés à titre d'exemples illustratifs et non limitatifs dans lesquels :
- La figure 1 représente selon une vue éclatée en perspective un couvercle conforme à l'invention destiné à être rapporté sur une cuve pour former un autocuiseur.
- La figure 2 montre selon une vue en coupe transversale, le profil d'un couvercle conforme à l'invention.

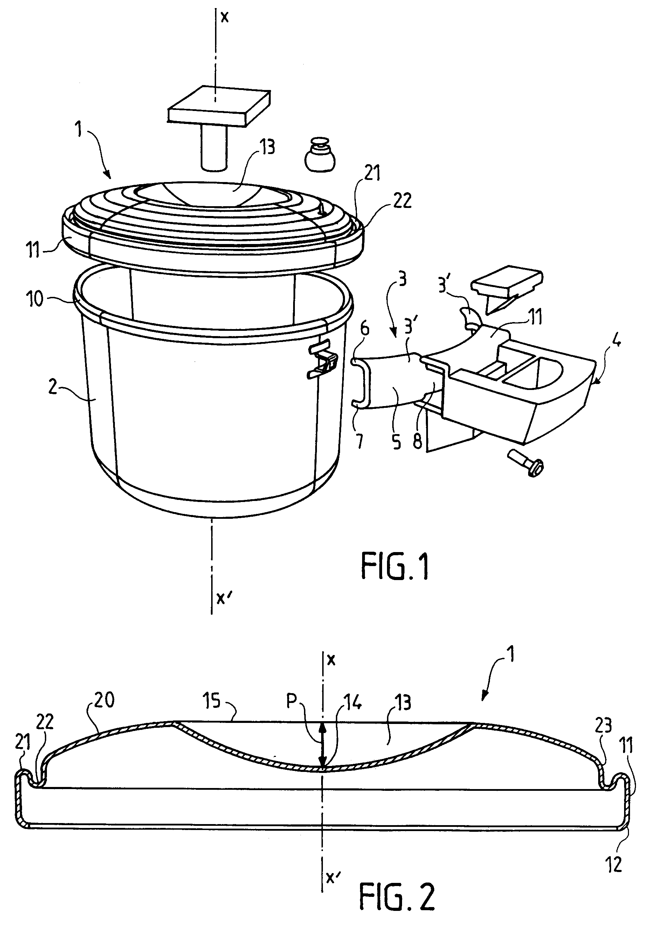

La figure 1 montre un couvercle 1 conforme à l'invention, destiné à être rapporté et verrouillé sur la cuve 2 d'un récipient sous pression tel qu'un autocuiseur. La cuve 2 est par exemple cylindrique, et est pourvue de deux mâchoires de verrouillage 3 solidaires de la cuve 2 par l'intermédiaire de poignées 4 dans lesquelles les mâchoires 3 sont intégrées. Les mâchoires 3 sont montées de préférence diamètralement opposées le long de la circonférence du récipient en considérant l'axe de symétrie x-x' du récipient. Les mâchoires 3 sont montées élastiquement mobiles dans les poignées 4 selon une direction radiale pour venir occuper une position de verrouillage contre la cuve 2 et le couvercle 1, dans laquelle elles assurent le verrouillage relatif du couvercle 1 et de la cuve 2. Les mâchoires 3 présentent par exemple une forme générale en arc de cercle s'étendant sur une portion de longueur de la circonférence du récipient assimilable dans le cas présent à un secteur de longueur. Chaque mâchoire 3 présente au moins sur un segment de longueur 3', de préférence sur deux segments de longueur 3', une face 5 sensiblement parallèle aux parois du récipient, ladite face 5 se terminant avantageusement à sa partie supérieure par un premier rebord rentrant 6 dirigé vers le centre du récipient et destiné à venir en appui sur le couvercle 1 pour en assurer le verrouillage. Dans l'exemple particulier de réalisation montré à la figure 1, les mâchoires 3 comportent un second rebord rentrant 7 dirigé également vers le centre du récipient, de manière à définir des segments 3' de section transversale sensiblement en U. Avantageusement, les segments 3' sont disposés aux deux extrémités de chaque mâchoire 3 et reliés entre eux par une barrette de liaison 8 de section transversale par exemple en forme de rectangle, et constituant un prolongement des faces 5. Le second rebord rentrant 7 est destiné à venir engager et verrouiller la face inférieure d'une collerette 10 s'étendant à la périphérie supérieure de la cuve 2.

Le couvercle 1 conforme à l'invention est de forme adaptée à celle de la cuve 2 et par exemple circulaire dans l'exemple de réalisation monré aux figures 1 et 2. Le couvercle 1 comporte une jupe périphérique 11 définissant une section cylindrique de révolution autour de l'axe x-x' de symétrie du couvercle 1. Avantageusement, la jupe périphérique 11 se termine à sa partie inférieure par une lèvre rentrante 12 dont la courbure est de préférence conjuguée à celle du second bord rentrant 7 des mâchoires.

Le couvercle 1 conforme à l'invention présente dans sa partie centrale, une zone bombée 13 définissant une face concave formant une partie de la face externe du couvercle 1. Avantageusement, la zone bombée 13 forme une calotte d'axe de symétrie confondu avec l'axe de symétrie y-y' du couvercle 1, et présentant en son point central 14 une profondeur 'p' par rapport à la limite supérieure 15 de la calotte au moins égale à 1 mm et ne dépassant pas 50 % de la hauteur totale du couvercle 1. La concavité ainsi formée permet en fonctionnement sous pression, d'obtenir une déformation du couvercle 1 qui génère une réaction de rentrée des parties périphériques du bord du couvercle 2. De manière particulièrement avantageuse, la zone bombée 13 représente entre 40 et 60 % de la surface totale de la face externe dudit couvercle 1. De manière préférentielle, la zone bombée 13 représente 50 % de la surface définie précédemment.

Le couvercle 1 présente également autour de la zone bombée 13, une zone annulaire 20 présentant une section transversale courbe dont la concavité est opposée à celle de la zone bombée 13. La zone annulaire 20 s'étend sensiblement jusqu'à la périphérie du couvercle 1 et peut être assimilée à un galbe elliptique permettant une recomposition des forces de pression agissant sur les faces internes du couvercle 1. La zone annulaire 20 permet en particulier une recomposition majoritaire des forces de pression selon un sens horizontal dans les zones périphériques externes du couvercle 1. A l'opposé les forces de pression sont dirigées majoritairement selon le sens vertical dans les zones les plus proches du centre du couvercle 1. Le moment fléchissant sur le couvercle 1 est en conséquence maintenu à une valeur proche de son minimum.

La jonction entre la jupe périphérique 11 et la zone annulaire 20 est constituée par un bord roulé périphérique 21 se raccordant à ladite zone annulaire 20 par un roulage 22 formant une rainure périphérique. Les courbures du bord roulé périphérique 21 et du roulage 22 sont inversées et de valeurs sensiblement égales. La face convexe dudit bord roulé périphérique 21 constitue la face interne du bord roulé et s'intègre dans la face interne du couvercle 1. Dans l'exemple de réalisation préférentiel montré aux figures 1 et 2, la courbure du bord roulé 21 est réalisée de manière à posséder un profil conjugué à la courbure du premier bord rentrant 6 de la mâchoire 3 afin d'améliorer son mouvement d'inertie. Une telle configuration géométrique permet en outre aux mâchoires 3 d'assurer un verrouillage complet de l'ensemble couvercle/cuve.

Le couvercle conforme à l'invention présente en conséquence des caractéristiques de résistance à la déformation remarquables, tout en étant d'une épaisseur de métal limitée par exemple de l'ordre de 1, 4 mm, la flèche maximum du couvercle étant limitée à 1, 5 mm sous une pression moyenne de 0,9 bars.

Dans la variante de réalisation préférentielle montrée à la figure 2, le roulage 22 se poursuit en direction de la zone annulaire 20 par une seconde section cylindrique 23 concentrique à l'axe x-x'. La présence de cette seconde section cylindique 23 présente l'avantage d'augmenter la résistance à la flexion du couvercle 1.

## Revendications

1. Couvercle (1) pour un récipient de cuisson sous pression comprenant une cuve (2) sur laquelle est destinée à être rapporté et verrouillé de manière étanche au moyen de mâchoires de verrouillage (3) ledit couvercle (1),
caractérisé en ce que le couvercle (1) comporte dans sa partie centrale une zone bombée (13) définissant une face concave formant une partie de la face externe du couvercle (1) ainsi qu'une zone annulaire (20) d'axe de symétrie confondu avec celui du couvercle (1) présentant une section transversale courbe dont la concavité est opposée à celle de la zone bombée (13), la zone bombée présentant en son point central une profondeur au moins égale à 1 mm et ne dépassant pas 50% de la hauteur totale du couvercle.

2. Couvercle selon la revendication 1 caractérisé en ce que la zone bombée (13) représente entre 40 et 60 %, et de préférence 50 %, de la surface de la face externe dudit couvercle (1).

3. Couvercle selon l'une des revendications 1 ou 2 caractérisé en ce que la zone annulaire (20) s'étend sensiblement jusqu'à la périphérie du couvercle.

4. Couvercle selon l'une des revendications 1 à 3 caractérisé en ce qu'il est limité à sa périphérie par une jupe périphérique (11).

5. Couvercle selon la revendication 4 caractérisé en ce que la jupe périphérique (11) constitue une section cylindrique centrée sur l'axe de symétrie (x-x') du couvercle (1).

6. Couvercle selon la revendication 4 ou 5 caractérisé en ce que la jonction entre la jupe périphérique (11) et la zone annulaire (20) est constituée par un bord roulé périphérique (21) se raccordant à ladite zone annulaire par un roulage (22) formant une rainure périphérique.

7. Couvercle selon la revendication 6 caractérisé en ce que les courbures du bord roulé périphérique (21) et du roulage (22) sont inversées et sensiblement égales.

8. Couvercle selon l'une des revendications 1 à 5 caractérisé en ce que la jonction entre la jupe périphérique (11) et la zone annulaire (20) est formée par une bordure périphérique plane ou légèrement inclinée.

9. Récipient de cuisson sous pression, en particulier autocuiseur, équipé d'un couvercle conforme à l'une des revendications 1 à 8.

## Claims

1. A lid (1) for a receptacle for cooking under pressure, said receptacle comprising a body (2) in which said lid (1) is intended to be mounted and locked in sealed manner by means of locking jaws (3), said lid (1) being characterized in that it includes in its central portion a depression zone (13) defining a concave face forming a portion of the outside face of the lid (1), and an annular zone (20) having the same axis of symmetry as that of the lid (1) and presenting a curved cross section that is concave in the opposite direction to the depression zone (13), the depression zone presenting at its central point a depth of not less than 1 mm and not exceeding 50% of the total height of the lid.

2. A lid according to claim 1, characterized in that the depression zone (13) represents between 40% and 60%, and preferably 50%, of the surface area of the outside face of said lid (1).

3. A lid according to claim 1 or 2, characterized in that the annular zone (20) extends substantially to the periphery of the lid.

4. A lid according to any one of claims 1 to 3, characterized in that it is delimited at its periphery by a peripheral skirt (11).

5. A lid according to claim 4, characterized in that the peripheral skirt (11) constitutes a cylindrical section centered on the axis of symmetry (x-x') of the lid (1).

6. A lid according to claim 4 or 5, characterized in that the junction between the peripheral skirt (11) and the annular zone (20) is constituted by a peripheral rolled edge (21) connected to said annular zone by a corrugation (22) forming a peripheral groove.

7. A lid according to claim 6, characterized in that the curvatures of the peripheral rolled edge (21) and the corrugation (22) are inverted and substantially equal.

8. A lid according to any one of claims 1 to 5, characterized in that the junction between the peripheral skirt (11) and the annular zone (20) is formed by a peripheral border that is plane or slightly inclined.

9. A receptacle for cooking under pressure, in particular a pressure cooker, fitted with a lid according to any one of claims 1 to 8.

## Patentansprüche

1. Deckel (1) für einen Druckkochbehälter mit einem Topf (2), an welchem mittels Verriegelungsbacken (3) der Deckel (1) in dichter Weise befestigt und verriegelt werden soll, dadurch gekennzeichnet, daß der Deckel (1) in seinem Mittelabschnitt eine gewölbte Zone (13) aufweist, die eine konkave Fläche bildet, welche einen Teil der Außenfläche des Deckels (1) bildet, sowie eine ringförmige Zone (20), deren Symmetrieachse mit derjenigen des Deckels (1) zusammenfällt und die einen gekrümmten Querschnitt aufweist, dessen Konkavität entgegengesetzt zu derjenigen der gewölbten Zone (13) ist, wobei die gewölbte Zone an ihrem Mittelpunkt eine Tiefe aufweist, die wenigstens gleich einem Millimeter ist und 50% der Gesamthöhe des Deckels nicht überschreitet.

2. Deckel (1) nach Anspruch 1, dadurch gekennzeichnet, daß die gewölbte Zone (13) zwischen 40% und 60% und vorzugsweise 50% der Außenoberfläche des Deckels (1) darstellt.

3. Deckel nach einem der Ansprüche 1 und 2, dadurch gekennzeichnet, daß sich die ringförmige Zone (20) im wesentlichen bis zum Umfang des Deckels erstreckt.

4. Deckel nach einem der Ansprüche 1 bis 3, dadurch gekennzeichnet, daß er an seinem Umfang durch eine Umfangsschürze (11) begrenzt ist.

5. Deckel nach Anspruch 4, dadurch gekennzeichnet, daß die Umfangsschürze (11) einen zylindrischen Abschnitt bildet, der auf die Symmetrieachse (x-x') des Deckels (1) zentriert ist.

6. Deckel nach Anspruch 4 oder Anspruch 5, dadurch gekennzeichnet, daß der Übergang zwischen der Umfangsschürze (11) und der ringförmigen Zone (20) durch eine gerollten Umfangsrand (21) gebildet ist, der sich an die ringförmige Zone durch eine Rollbiegung (22) anschließt, die eine Umfangsnut bildet.

7. Deckel nach Anspruch 6, dadurch gekennzeichnet, daß die Krümmungen des gerollten Umfangsrandes (21) und der Rollbiegung (22) zueinander entgegengesetzt und im wesentlichen gleich sind.

8. Deckel nach einem der Ansprüche 1 bis 5, dadurch gekennzeichnet, daß der Übergang zwischen der Umfangsschürze (11) und der ringförmigen Zone (20) durch eine ebene oder geringförmig geneigte Umfangsumrandung gebildet ist.

9. Druckkochbehälter, insbesondere Dampfkochtopf, versehen mit einem Deckel nach einem der Ansprüche 1 bis 8.
